# FASCICULE DE BREVET EUROPEEN

(11) **EP 0 328 436 B1**
(45) Date de publication et mention de la délivrance du brevet: **30.03.1994**
(21) Numéro de dépôt: 89400271.6
(22) Date de dépôt: 31.01.1989
(51) Int. Cl.: H04Q 7/02, G06F 7/00

(54) **Procédé et dispositif de décodage partiel de l'entête d'un message de communication émis par une première station vers au moins une seconde station, notamment dans un véhicule automobile**
Verfahren und Anordnung zur Teildekodierung des Vorsatzes einer Kommunikationsnachricht, gesendet von einer ersten nach mindestens einer zweiten Station, insbesondere in einem Fahrzeug
Method and device for the partial decoding of the header of a communication message sent by a first station towards at least a second station, especially in a motor vehicle

(30) Priorité: 10.02.1988 FR 8801595
(43) Date de publication de la demande: 16.08.1989
(73) Titulaire: AUTOMOBILES PEUGEOT, 75116 Paris (FR); AUTOMOBILES CITROEN, 92200 Neuilly-sur-Seine (FR)
(72) Inventeur: Herbault, Patrick, F-75016 - Paris (FR)
(74) Mandataire: Polus, Camille

(56) Documents cités:
- EP-A- 0 298 575
- DE-A- 3 149 926
- GB-A- 2 062 415
- IEEE JOURNAL OF SOLID-STATE CIRCUITS, vol. SC-11, no. 5, octobre 1976, pages692-695, New York, US; C.A. MEAD et al.: "128-Bit-multicomparator"

## Description

La présente invention concerne un procédé de décodage partiel de l'entête d'un message de communication émis par une première station vers au moins une seconde station, notamment d'un véhicule automobile, et un dispositif de décodage pour la mise en oeuvre d'un tel procédé.

Dans un contexte général, on connaît déjà dans l'état de la technique des dispositifs qui permettent de rechercher des mots clés dans une base de données.

Ainsi, le document DE-A-3 149 926 décrit un comparateur de reconnaissance d'une combinaison de données dans un flux.

Le document IEEE JOURNAL OF SOLID STATE CIRCUITS, volume SC-11, n°5, Octobre 1976, pages 692-695, décrit un dispositif de décodage par exemple d'une suite de caractères ASCII dans un flux.

Cependant, ces documents ne décrivent pas de dispositifs de décodage partiel de l'entête d'un message de communication, au sens de la présente demande.

En effet, les entêtes de messages de communication utilisés par exemple dans les véhicules automobiles peuvent contenir des informations caractérisant le message, telles que par exemple des informations de priorité, de numéro de message, d'adresse ou de contrôle.

Si le format du message est figé, il suffit de comparer, dans la station recevant le message, l'entête du message reçu à une entête que l'on souhaite recevoir, pour déterminer si la station est adressée ou non.

Par contre, un tel traitement d'une entête à format évolutif ou lorsque l'on souhaite recevoir différents messages, est extrêmement long et difficile.

Le but de l'invention est donc de résoudre ces problèmes en proposant un procédé et un dispositif de décodage qui permettent d'améliorer le décodage de l'entête d'un message et qui soit très rapide.

A cet effet, l'invention a pour objet un procédé de décodage partiel de l'entête d'un message de communication, émis par une première station vers au moins une seconde station, notamment d'un véhicule automobile, caractérisé en ce qu'on charge dans un premier registre de la station recevant le message, au moins une partie de l'entête du message, on compare le contenu du premier registre avec le contenu d'un second registre de cette station, dans lequel on a chargé un mot caractéristique affecté à cette station, et on sélectionne bit à bit, les résultats des comparaisons afin de ne retenir que le ou les bits souhaités de l'entête, utilisables par la station.

Selon un autre aspect, l'invention a également pour objet un dispositif de décodage partiel de l'entête d'un message de communication émis par une première station vers au moins une seconde station, notamment d'un véhicule automobile, pour la mise en oeuvre du procédé tel que décrit précédemment, caractérisé en ce que la station recevant le message comporte un premier registre dans lequel est chargée au moins une partie de l'entête du message, un second registre dans lequel est chargé un mot caractéristique affecté à cette station, des moyens de comparaison des contenus des premier et second registres et des moyens de sélection bit à bit des résultats des comparaisons, afin de ne retenir que le ou les bits souhaités de l'entête, utilisables par ladite station.

L'invention sera mieux comprise à l'aide de la description qui va suivre, donnée uniquement à titre d'exemple et faite en se référant aux dessins annexés, sur lesquels :
- la Fig.1 représente un schéma illustrant le fonctionnement d'un procédé et d'un dispositif selon l'invention;
- les Fig.2,3 et 4 représentent des schémas synoptiques représentant trois modes de réalisation de moyens mettant en oeuvre un procédé selon l'invention, intégrés dans une station;
- la Fig.5 représente un schéma électrique d'un premier mode de réalisation de moyens mettant en oeuvre un procédé selon l'invention, dans une station;
- la Fig.6 représente un schéma électrique d'un second mode de réalisation de moyens mettant en oeuvre un procédé selon l'invention, dans une station; et
- la Fig.7 représente plusieurs exemples de connexion de différents composants, mettant en oeuvre un procédé selon l'invention.

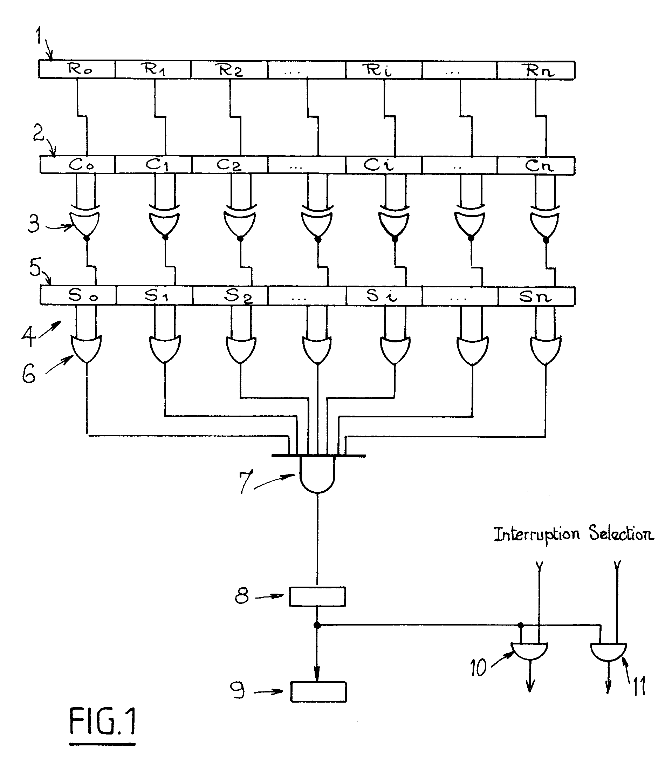

Ainsi qu'on peut le voir sur la Fig.1, un dispositif de décodage partiel de l'entête d'un message de communication émis par une première station vers au moins une seconde station, dans un système de transmission d'informations par exemple de véhicule automobile, est caractérisé en ce que la station recevant le message comporte un premier registre 1 dans lequel est chargée au moins une partie de l'entête du message, référencée respectivement par Ro à Rn, et un second registre 2 dans lequel est chargé un mot caractéristique, référencé par Co à Cn, affecté à cette station. Des moyens de comparaison 3, constitués par exemple par des circuits NON-OU EXCLUSIF reçoivent sur leurs entrées, les parties correspondantes des contenus des premier et second registres 1,2 afin d'effectuer la comparaison entre les contenus de ceux-ci.

Par ailleurs, le dispositif selon l'invention comporte également des moyens 4 de sélection bit à bit des résultats des comparaisons afin de ne retenir que le ou les bits souhaités de l'entête, utilisables par ladite station.

Avantageusement, ces moyens de sélection comprennent un troisième registre 5 dans lequel est chargé un mot So à Sn de validation/inhibition des résultats des comparaisons, ce mot étant modifiable bit à bit, comme cela sera décrit plus en détail par la suite. Les sorties de ce troisième registre 5 ainsi que les sorties des moyens de comparaison 3 sont raccordées aux entrées de portes ET 6 permettant de sélectionner des résultats des comparaisons en fonction du mot de validation/inhibition. Les sorties de toutes les portes ET 6 sont raccordées aux entrées d'une porte ET 7 de commande d'état de la station.

Le procédé de décodage partiel de l'entête, selon l'invention, consiste donc à charger dans un premier registre 1 de la station, au moins une partie de l'entête du message reçu, à comparer le contenu de ce premier registre 1 avec le contenu d'un second registre 2 dans lequel on a chargé un mot caractéristique affecté à cette station, et à sélectionner bit à bit, les résultats des comparaisons afin de ne retenir que le ou les bits souhaités de l'entête, utilisables par ladite station. On associe donc à l'entête du message reçu, par exemple de n bits, un mot caractéristique de la station, auquel est comparé au moins en partie l'entête du message reçu, un mot de validation/inhibition permettant de ne retenir par exemple que quelques bits de l'entête, correspondant par exemple à l'adresse de la station, afin d'activer celle-ci.

Le registre de comparaison 2 contient comme on l'a décrit précédemment, la valeur à comparer, le registre de sélection 3 permet bit à bit de valider ou d'inhiber la comparaison i suivant la valeur de bit et enfin, la porte 7 rassemble le résultat des comparaisons validées pour permettre de commander l'état de la station.

Le signal obtenu à partir de la porte 7 peut être utilisé pour positionner un bit dans un registre interne 8, positionner un bit de réponse en 9, valider ou inhiber une interruption de réception par une porte ET 10 ou encore valider ou inhiber un signal de sélection par une porte ET 11.

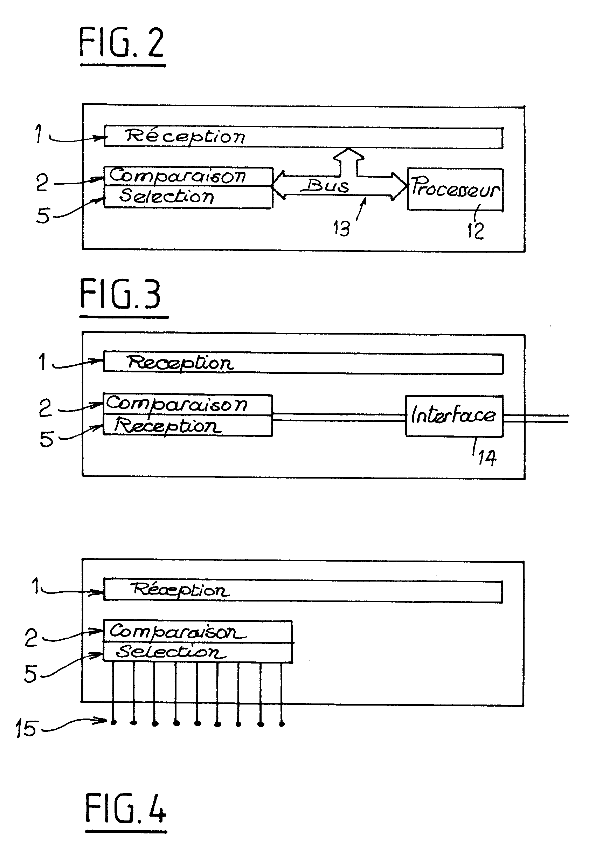

Comme on peut le voir sur la Fig.2, le traitement peut être effectué par un processeur 12 raccordé aux registres 1, 2 et 5 décrits précédemment par une ligne omnibus 13.

Dans ce cas, la fonction de décodage partiel peut être réalisée par microprogramme à partir du processeur.

Le signal de comparaison issu de la porte 7 mentionée précédemment en regard de la Fig.1, permet d'améliorer la vitesse de traitement et d'indiquer indépendamment de la charge du processeur, par un bit d'état dans un registre, la validation de signaux de sélection ou d'interruption, liés à la réception du message correspondant au décodage partiel souhaité. Les registres sont dans ce cas directement adressables par le processeur.

Par contre, et comme on peut le voir sur la Fig.3, si le traitement est effectué par un ensemble de circuits logiques, le signal de décodage partiel est utilisé directement par la logique interne des circuits intégrés de la station. La programmation des registres 1,2 et 5 peut alors être masquée définitivement, téléchargée ou encore programmée à la conception du circuit par une interface série 14 à partir du reste de la station.

Par ailleurs, et comme cela est représenté sur la Fig.4, il est également possible de modifier le mot de validation/inhibition chargé dans le registre de sélection par fixation du potentiel des broches 15 d'entrée de commande d'état de ce registre.

Ainsi, si on veut valider une comparaison, on peut forcer la broche d'entrée correspondant à la valeur souhaitée en décodage. Par contre, si on laisse la broche en sortie, le niveau du bit correspondant reçu est indiqué sur cette broche.

On voit donc comme décrit précédemment que les registres peuvent être :
- directement adressables par un processeur,
- programmés ou téléchargés,
- programmés par les broches extérieures du circuit.

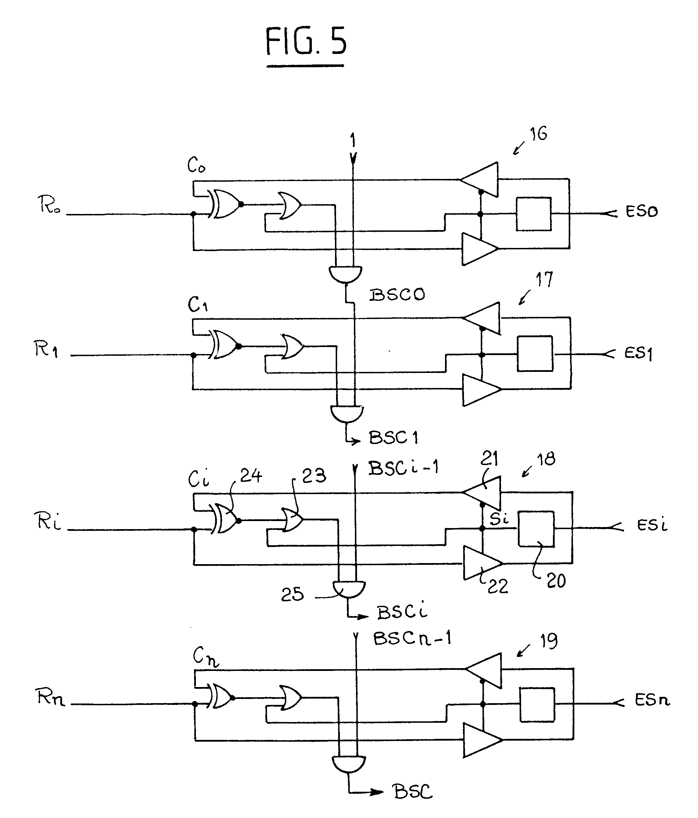

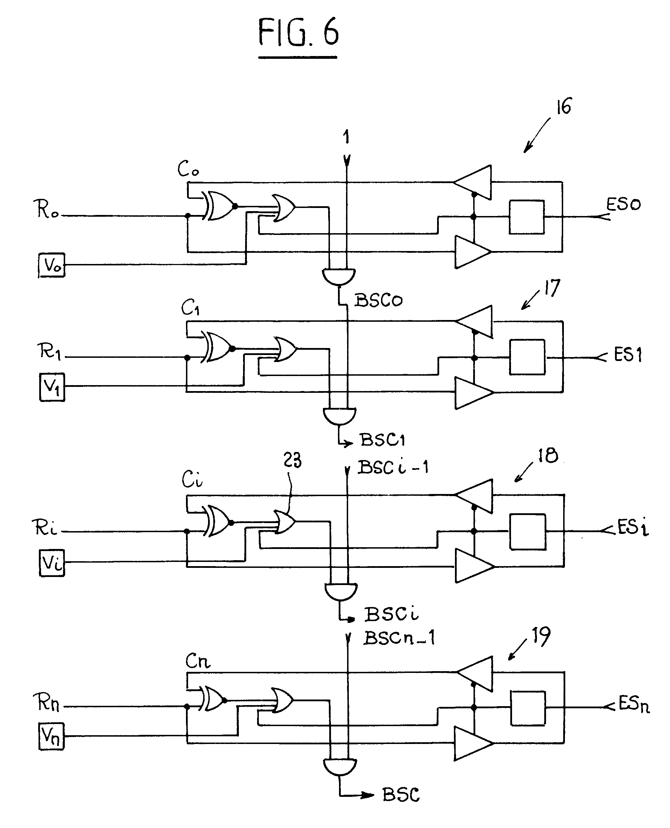

Deux exemples de cette dernière réalisation sont décrits plus précisément en regard des figures 5 et 6.

Dans l'exemple de réalisation représenté sur la Fig.5, le décodage s'effectue par un ensemble de cellules identiques 16,17,18,19 câblées en cascade. Pour chaque bit, la cellule correspondante par exemple 18 pour le bit i, contient un circuit analogique 20 qui détecte si la broche d'entrée ESi de commande d'état, est en sortie ou forcée en entrée. Si la broche est forcée en entrée, le signal issu du circuit analogique 20 est le bit de sélection Si décrit précédemment, qui est alors à zéro, ce qui entraîne :
- le fonctionnement d'un tampon d'entrée 21,
- l'inhibition d'un tampon de sortie 22, et
- l'autorisation de la comparaison sur une porte OU 23.

Par contre, si la broche est forcée en sortie, la signal issu de circuit analogique 20 est positionné à la valeur 1 logique, ce qui entraîne :
- l'inhibition du tampon d'entrée 21,
- l'inhibition de la comparaison sur la porte OU 23,
- l'autorisation du fonctionnement du tampon de sortie 22 qui ressort alors à l'extérieur de circuit le bit reçu.

Il est à noter que la comparaison bit à bit est effectuée par une porte NON OU EXCLUSIF 24 recevant sur ses entrées les bits Ri et Ci correspondants et décrits précédemment. La combinaison des résultats des comparaisons est réalisée par la mise en cascade de portes ET 25, la porte de la première cellule 16, étant initialisée à un niveau 1 logique.

Une amélioration de ce dispositif est représentée sur la figure 6, où on voit que la porte OU 23 par exemple de la cellule 18 correspondant au bit i reçoit un bit de validation de réception Vi, qui passe de 1 à 0 pour indiquer la réception en temps réel du bit.

Ceci permet d'avertir éventuellement de la non sélection de la station concernée avant la réception totale des bits.

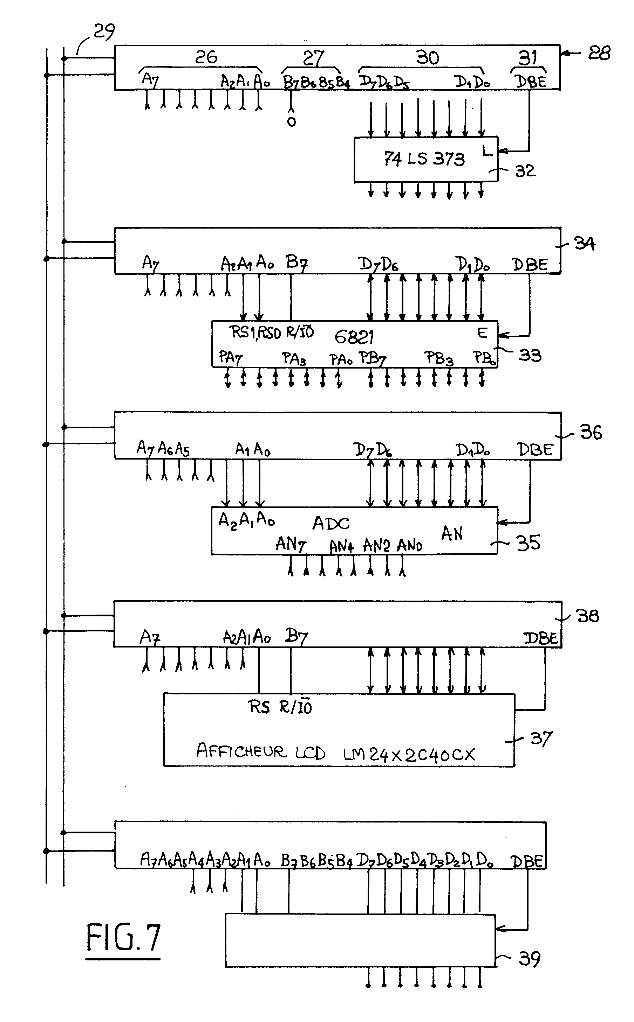

Sur la Fig.7, on a représenté différentes applications mettant en oeuvre un procédé et un dispositif selon l'invention. Dans ces applications, l'entête du message contient un octet d'adresse 26 et un demi-octet de contrôle 27 dont le premier bit est un ordre de lecture/écriture. Un circuit 28 mettant en oeuvre un procédé selon l'invention, relié à un réseau 29 du véhicule, fournit un octet 30 de données, validé par un signal DBE 31 à un premier composant 32 qui, dans cet exemple, est un périphérique constitué d'une bascule huit bits du type 74 LS 373, correspondant à une adresse unique, et pouvant être sélectionné en écriture uniquement.

Il est donc nécessaire de programmer l'adresse sur huit bits et le bit de contrôle B7 du demi-octet de contrôle 27 en écriture pour activer correctement ce composant.

Le deuxième exemple donné est celui d'un port double 33 du type 6821 Motorola, comportant quatre registres, à savoir les deux registres de direction des ports et les deux registres des ports.

Seuls les six premiers bits A7 à A2 d'un dispositif 34 mettant en oeuvre le procédé selon l'invention, sont programmés. Les deux bits A1 A0 laissés en sortie permettent d'adresser les quatre registres du port double à quatre adresses consécutives. Le but B7 permet encore de sélectionner l'écriture ou la lecture.

De même, l'exemple suivant représente le câblage d'un périphérique 35 de conversion analogique numérique à huit entrées, décodé à huit entrées adresses consécutives.

Le composant 37 est constitué quant à lui par un afficheur à cristaux liquides raccordé à un dispositif 38 mettant en oeuvre le procédé selon l'invention.

Cet afficheur a un registre de contrôle et un registre de caractère codés. Le bit d'adresse de poids faible A0 sert à sélectionner par la broche RS de l'afficheur, qui peut être constitué par un circuit LM24X2C40CX, le mode contrôle ou le mode caractère avec une possibilité de lecture ou d'écriture.

On comprend que le décodage partiel permet d'utiliser les différents périphériques existants dans un espace adressable distribué, décodable du simple octet pour un registre à un bloc d'octets pour une mémoire double accès, image de l'espace adressable.

Si par ailleurs, les premiers bits sont consacrés à un niveau de priorité de message, il suffit de ne pas programmer les broches correspondantes pour les ignorer dans le décodage d'adresse, comme on peut le voir dans le cas du composant 39 représenté sur cette Fig.7.

Dans cet exemple, les trois broches de poids correspondant à une priorité allant de 0 à 7, ne sont pas prises en compte lors d'un décodage.

Le procédé et le dispositif selon l'invention permettent donc d'opérer une sélection de la partie d'entête que l'on désire analyser, ce qui permet d'améliorer les possibilités et la rapidité d'adressage des stations.

## Revendications

1. Procédé de décodage partiel de l'entête d'un message de communication émis par une première station vers au moins une seconde station, notamment d'un véhicule automobile, caractérisé en ce qu'on charge dans un premier registre (1) de la station recevant le message, au moins une partie de l'entête du message (Ro...Rn), on compare le contenu du premier registre avec le contenu d'un second registre (2) de cette station, dans lequel on a chargé un mot caractéristique (Co...Cn) affecté à cette station, et on sélectionne bit à bit, les résultats des comparaisons afin de ne retenir que le ou les bits souhaités de l'entête, utilisables par ladite station.

2. Dispositif de décodage partiel de l'entête d'un message de communication émis par une première station vers au moins une seconde station, notamment d'un véhicule automobile, pour la mise en oeuvre d'un procédé selon la revendication 1, caractérisé en ce que la station recevant le message comporte un premier registre (1) dans lequel est chargé au moins une partie de l'entête du message (Ro ... Rn), un second registre (2) dans lequel est chargé un mot caractéristique (Co ... Cn) affecté à cette station, des moyens de comparaison (3) des contenus des premier et second registres et des moyens de sélection (4) bit à bit des résultats des comparaisons, afin de ne retenir que le ou les bits souhaités de l'entête, utilisables par ladite station.

3. Dispositif selon la revendication 2, caractérisé en ce que les moyens de sélection (4) comprennent des moyens de validation/inhibition des résultats des comparaisons.

4. Dispositif selon la revendication 2 ou 3, caractérisé en ce que les moyens de sélection (4) sont modifiables bit à bit.

5. Dispositif selon l'une quelconque des revendications 2 à 4, caractérisé en ce que les moyens de sélection (4) comprennent un troisième registre (5) dans lequel est chargé un mot de validation/inhibition (So...Sn).

6. Dispositif selon la revendication 5, caractérisé en ce que les sorties du troisième registre (5) sont reliées à des entrées de portes ET (6), dont les autres entrées sont reliées aux sorties des moyens de comparaison (3), les sorties des portes ET (6) étant reliées aux entrées d'une porte ET (7) de commande d'état de la station.

7. Dispositif selon l'une quelconque des revendications 2 à 6, caractérisé en ce que les moyens de comparaison comprennent des portes NON-OU EXCLUSIF (3).

8. Dispositif selon l'une quelconque des revendications 4 à 7, caractérisé en ce que les moyens de sélection (4) sont modifiables par programme.

9. Dispositif selon l'une quelconque des revendications 4 à 7, caractérisé en ce que les moyens de sélection (4) sont modifiables par fixation du potentiel de broches d'entrée (15) de commande d'état de ces moyens.

## Claims

1. Process for the partial decoding of the heading of a communication message emitted by a first station to at least one second station, particularly a car, characterized in that loading takes place into a first register (1) of the station receiving the message at least part of the heading of the message (Ro...Rn), the content of the first register is compared with the content of a second register (2) of said station, into which has been loaded a characteristic word (Co....Cn) allocated to said station and in bit-by-bit manner selection takes place of the results of the comparisons in order to only retain the desired bit or bits of the heading usable by the station.

2. Device for the partial decoding of the heading of a communication message emitted by a first station to at least one second station, particularly a car, for performing the process according to claim 1, characterized in that the station receiving the message has a first register (1) into which is loaded at least part of the heading of the message (Ro...Rn), a second register (2) into which is loaded a characteristic word (Co...Cn) allocated to said station, means (3) for comparing the contents of the first and second registers and means (4) for the bit-by-bit selection of the results of the comparisons, in order to only retain the desired bit or bits of the heading usable by said station.

3. Device according to claim 2, characterized in that the selection means (4) incorporate means for the validation/inhibition of the results of the comparisons.

4. Device according to claim 2 or 3, characterized in that the selection means (4) can be modified bit-by-bit.

5. Device according to any one of the claims 2 to 4, characterized in that the selection means (4) incorporate a third register (5) into which is loaded a validation/inhibition word (So...Sn).

6. Device according to claim 5, characterized in that the outputs of the third register (5) are connected to inputs of AND gates (6), whose other inputs are connected to the outputs of the comparison means (3), the outputs of the AND gates (6) being connected to the input of AND gate (7) for controlling the state of the station.

7. Device according to any one of the claims 2 to 6, characterized in that the comparison means incorporate EXCLUSIV NOR gates (3).

8. Device according to any one of the claims 4 to 7, characterized in that the selection means (4) are program-modifiable.

9. Device according to any one of the claims 4 to 7, characterized in that the selection means (4) can be modified by fixing the potential of input pins (15) for controlling the state of said means.

## Patentansprüche

1. Verfahren zur Teildekodierung des Vorsatzes einer von einer ersten Station zu mindestens einer zweiten Station, insbesondere einem Kraftfahrzeug, gesendeten Kommunikationsnachricht, dadurch gekennzeichnet, daß man in einen ersten Speicher (1) der die Nachricht empfangenden Station mindestens einen Teil des Vorsatzes der Nachricht (Ro...Rn) lädt, den Inhalt des ersten Speichers mit dem Inhalt eines zweiten Speichers (2) dieser Station vergleicht, in den man ein dieser Station zugeteiltes Kennzeichnungswort (Co...Cn) geladen hat, und die Ergebnisse der Vergleiche bitweise auswählt, um nur das oder die gewünschten, von dieser Station verwendbaren Bits des Vorsatzes zu behalten.

2. Vorrichtung zur Teilkodierung des Vorsatzes einer von einer ersten Sation zu mindestens einer zweiten Station, insbesondere einem Kraftfahrzeug, gesendeten Kommunikationsnachricht zur Durchführung eines Verfahrens nach Anspruch 1, dadurch gekennzeichnet, daß die die Nachricht empfangende Station einen ersten Speicher (1), in den wenigstens ein Teil des Vorsatzes der Nachricht (Ro...Rn) geladen wird, einen zweiten Speicher (2), in den ein dieser Station zugeteiltes Kennzeichnungswort (Co...Cn) geladen ist, Mittel (3) zum Vergleichen der Inhalte des ersten und des zweiten Speichers und Mittel (4) zur bitweisen Auswahl der Ergebnisse der Vergleiche umfaßt, um nur das oder die gewünschten, von dieser Station verwendbaren Bits des Vorsatzes zu behalten.

3. Vorrichtung nach Anspruch 2, dadurch gekennzeichnet, daß die Auswahlmittel (4) Mittel zum Freigeben/Sperren der Ergebnisse der Vergleiche umfassen.

4. Vorrichtung nach Anspruch 2 oder 3, dadurch gekennzeichnet, daß die Auswahlmittel (4) bitweise veränderbar sind.

5. Vorrichtung nach einem der Ansprüche 2 bis 4, dadurch gekennzeichnet, daß die Auswahlmittel (4) einen dritten Speicher (5) umfassen, in den ein Freigabe/Sperr-Wort (So...Sn) geladen ist.

6. Vorrichtung nach Anspruch 5, dadurch gekennzeichnet, daß die Ausgänge des dritten Speichers (5) mit den Eingängen von UND-Gliedern (6) verbunden sind, deren andere Eingänge mit den Ausgängen der Vergleichsmittel (3) verbunden sind, wobei die Ausgänge der UND-Glieder (6) mit den Eingängen eines UND-Glieds (7) zur Steuerung des Zustands der Station verbunden sind.

7. Vorrichtung nach einem der Ansprüche 2 bis 6, dadurch gekennzeichnet, daß die Vergleichsmittel EXCLUSIVES-NICHT-ODER-Glieder (3) umfassen.

8. Vorrichtung nach einem der Ansprüche 4 bis 7, dadurch gekennzeichnet, daß die Auswahlmittel (4) durch Programm veränderbar sind.

9. Vorrichtung nach einem der Ansprüche 4 bis 7, dadurch gekennzeichnet, daß die Auswahlmittel (4) durch Festlegung des Potentials von Eingangsstiften (15) zur Steuerung des Zustands dieser Mittel veränderbar sind.
